# EUROPÄISCHE PATENTSCHRIFT

(11) **EP 3 075 789 B1**
(45) Veröffentlichungstag und Bekanntmachung des Hinweises auf die Patenterteilung: **27.06.2018**
(21) Anmeldenummer: 16162178.4
(22) Anmeldetag: 24.03.2016
(51) Int. Cl.: C09D 5/02, C09D 17/00, C08G 18/54, C08G 12/06, C09D 175/04, C09D 161/22, C09D 161/00, C08G 4/00, C09D 159/00, C08G 18/75, C08G 16/02, C09B 67/46

(54) **VERFAHREN ZUR HERSELLLUNG FUNKTIONALISIERTER KETON-ALDEHYD-KONDENSATIONSHARZE**
PROCESS FOR PRODUCING FUNCTIONALISED KETONE ALDEHYDE CONDENSATION RESINS
PROCÉDÉ DE PRÉPARATION DE RÉSINES DE CONDENSATION CÉTONE-ALDEHYDE FONCTIONNALISÉES

(30) Priorität: 02.04.2015 EP 15162343
(43) Veröffentlichungstag der Anmeldung: 05.10.2016
(73) Patentinhaber: Evonik Degussa GmbH, 45128 Essen (DE)
(72) Erfinder: Dürr, Christoph Jürgen, 46286 Dorsten (DE); Burian, Bettina, 46282 Dorsten (DE); Engelke, Daniel, 46286 Dorsten (DE); Ewald, Michael, 45768 Marl (DE); Jörres, Tanja, 46569 Hünxe (DE); Retzlaff, Erika, 45772 Marl (DE)

(56) Entgegenhaltungen:
- EP-A1- 2 910 584
- DD-A1- 101 172
- DE-C2- 2 721 186
- GB-A- 557 046
- GB-A- 779 092
- GB-A- 1 101 587
- GB-A- 1 166 516
- GB-A- 1 295 829
- JP-A- H05 179 215
- US-A- 4 033 914
- US-A- 4 221 876
- DATABASE WPI Week 200902 Thomson Scientific, London, GB; AN 2009-A36030 XP002744016, -& CN 101 220 129 A (UNIV SOUTH CHINA TECHNOLOGY) 16. Juli 2008 (2008-07-16)

## Beschreibung

Die Erfindung betrifft ein Verfahren zur Herstellung funktionalisierter Keton-Aldehyd-Kondensationsharze.
Es ist bekannt, dass Ketone oder Gemische aus Ketonen und Aldehyden in Gegenwart basischer Katalysatoren oder Säuren zu harzartigen Produkten umgesetzt werden können. So lassen sich aus Gemischen von Cyclohexanon und Methylcyclohexanon Harze herstellen. Die Reaktion von Ketonen und Aldehyden führt zumeist zu Hartharzen, die oft in der Lackindustrie Verwendung finden.
Technisch bedeutende Keton-Aldehydharze werden heute zumeist unter Verwendung von Formaldehyd hergestellt. Derartige Keton-Formaldehydharze sind bereits seit langem bekannt. Verfahren zu deren Herstellung sind beispielsweise in DE 33 24 287, US 2,540,885, US 2,540,886, DE 11 55 909, DE 13 00 256 und DE 12 56 898 beschrieben.
Zur Herstellung werden normalerweise Ketone und Formaldehyd in Gegenwart von Basen miteinander zur Reaktion gebracht.
Keton-Aldehydharze werden in Beschichtungsstoffen z. B. als filmbildende Zusatzkomponenten eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-Aldehydharze eine geringe Schmelz- und Lösungsviskosität und dienen daher in Beschichtungsstoffen u. a. als filmbildende Funktionsfüllstoffe.

DD 101 172 A1 beschreibt ein Verfahren zur Herstellung von Keton-Aldehyd-Harzen, wobei die Ketonkomponente durch die Modifizierung von vorgebildeten Methylolketonen mit Ethylglykol in Gegenwart von sauren Katalysatoren umgesetzt wird. Die Modifizierung erfolgte in mehreren Schritten.

JP H05-179215 A offenbart ein Verfahren zur Herstellung eines Ketonharzes unter Verwendung von Aceton, Formaldehyd und Tetraethylenpentamin mittels nachgeschalteter Modifizierung.

Das Dokument CN 101 220 129 A offenbart ein Verfahren zur Herstellung modifizierter Keton-Aldehyd-Harze zur Anwendung bei der Herstellung von Beschichtungen und Druckfarben, worin Acetophenon und Paraformaldehyd in Gegenwart von Ethanol und Natriumhydroxyd umgesetzt werden.

Die aus dem Stand der Technik bekannten Systeme haben den Nachteil, dass keine breite Einführung chemischer Funktionalitäten an den Harzkörper möglich ist. Harzgebundenen Hydroxy- oder Carboxyfunktionalitäten werden beispielsweise haftungsgebende Eigenschaften zugeschrieben. Harzgebundene Amine dagegen können durch ihre hohe Pigmentaffinität zu einer deutlichen Erhöhung der Farbstärke gegenüber Amin-freien Systemen führen. Der Nachteil bei der Herstellung funktionaler Harzsysteme ist, dass eine Funktionalisierung der Harze meist in mindestens einem weiteren, der eigentlichen Kondensationsreaktion nachgeschaltetem Schritt durchgeführt werden muss. Eine häufig verwendete Möglichkeit zur nachgeschalteten weiteren Umsetzung ist ein zweistufiges Verfahren, bei welchem zuerst die Keto-Gruppen typischer Keton-Aldehyd-Kondensationsharze durch Hydrierung in Hydroxy-Funktionalitäten umgewandelt werden. Im Anschluss kann dann eine Umsetzung der Hydroxygruppen mit entsprechend funktionalisierten reaktiven Komponenten durchgeführt werden. Als reaktive Komponenten eignen sich hier üblicherweise Verbindungen, die in dem Fachmann bekannter Weise mit OH-Funktionen reagieren können, wie Isocyanate, Carbodiimide, Carbonsäuren u.a. Eine Route zur Herstellung Doppelbindungs-funktioneller Ketonharze ist beispielsweise in DE10338560 beschrieben. DE 102007018812 beschreibt ferner die Einführung von Polyethern in Keton-Aldehyd-Kondensationsharze, indem im Anschluss an eine Hydrierung der Keton-Aldehyd-Kondensationsharze eine Umsetzung der Carbonyl-hydrierten Keton-Aldehyd-Kondensationsharze mit Oxiranen durchgeführt wird.
Eine alternativ zur Funktionalisierung von Keton-Aldehyd-Kondensationsharzen verwendete Methode in einem Verfahrensschritt ist der Einbau chemischer Funktionalitäten in Keton-Aldehyd-Kondensationsharze über den Einsatz entsprechend funktionalisierter Ketone. Diese sind jedoch meist schwerer zugänglich als die entsprechend funktionalisierten Alkohole und meist höher in den Rohstoffkosten, was marktseitig oft unerwünscht ist.

Der vorliegenden Erfindung lag die Aufgabe zu Grunde, ein Verfahren zur Herstellung von Keton-Aldehyd-Harzen mit einem verbreiterten Anwendungsspektrum zur Verfügung zu stellen.

Dabei hat sich überraschenderweise gezeigt, dass eine gezielte Modifizierung von Keton-Aldehyd-Harzen möglich ist, wenn bei der Reaktion entsprechende Reaktionskomponenten anwesend sind und die entsprechenden Reaktionsbedingungen eingehalten werden.

Demgemäß sind Verfahren zur Herstellung funktionalisierter Harze umfassend die Kondensation von aliphatischen Ketonen ausgewählt aus Aceton, Acetophenon, ortho-, meta oder para-Phenylacetophenon, Methylethylketon, 3-Pentanon, 2-Heptanon, 3-Heptanon, 4-Heptanon, 2-Oktanon, 3-Oktanon, 2-Undecanon, 5-Methylhexan-2-on (Methylisoamylketon), 4-Methylpentan-2-on (Methylisobutylketon), Cyclopentanon, Cyclododecanon, Mischungen aus 2,2,4- und 2,4,4-Trimethylcyclopentanon, Cycloheptanon, Cyclooctanon, Cyclohexanon, o-, m- oder p-Methoxyacetophenon, o-, m- oder p-[*N*,*N*-Dialkylaminophenyl]ethanon, sowie alkylsubstituierte Cyclohexanone, wie 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon oder Dione oder Mischungen hieraus und Aldehyden in Gegenwart mindestens eines Aminoalkohols und dessen Derivate ausgewählt aus *N*,*N*-Dimethylaminoethanol, Trimethylaminoethylethanolamin, 3-Dimethylaminopropan-1-ol, Butyldiethanolamin, Butylethanolamin, Dibutylethanolamin, Diethylethanolamin, Ethylethanolamin, Dimethylaminoethoxyethanol, Methyldiethanolamin, *N*,*N*-Dimethylisopropanolamin, *N-*Methylethanolamin, Diethanolamin, Diisopropanolamin, Triisopropanolamin, *N*-(2-Hydroxyethl)piperidin, Diisopropanol-p-toluidin, *N*,*N*-Di-(2-hydroxyethyl)anilin, *N-(2-*Hydroxyethyl)anilin, 2-(2-Aminoethoxy)ethanol, 3-Amino-1-propanol, 5-Amino-1-pentanol, Monoethanolamin, *N*-(2-Aminoethyl)ethanolamin, Isopropanolamin oder 2,2'-(Phenylamino)diethanol, 1-(2-Hydroxyethyl)piperazin oder 4-(2-Hydroxyethyl)morpholin, deren Derivate oder Mischungen hieraus, wobei als Aldehyd eine 20 bis 40 Gew.-%ige wässrige Formaldehydlösung eingesetzt, der Alkohol kovalent in das Harz eingebunden und die Kondensation in situ durchgeführt wird, Gegenstand der vorliegenden Erfindung.

Die Erfindung erlaubt die (in-situ) Funktionalisierung von Keton-Aldehyd-Harzen durch den Einsatz entsprechender Modifizierungsmittel, insbesondere durch den Einsatz von Alkoholen während der Synthese. Nach dem Stand der Technik werden Funktionalisierungen bisher in der Kondensation nachgeschalteten Schritten durchgeführt. Diese Schritte beinhalten z. B. eine Umsetzung von durch Hydrierung der Keto-Gruppen erhaltenen OH-Gruppen mit entsprechend funktionalisierten Isocyanaten. Die vorliegende Erfindung erlaubt demgegenüber eine Reduzierung der Verfahrensschritte gegenüber herkömmlichen Verfahren. Dies bringt dadurch weitere prozesstechnische Vorteile wie höhere Raum/Zeitausbeuten und auch anwendungstechnische Vorteile da neben der Art der einzuführenden Funktionalität auch die Menge gezielt auf die Anwendung abgestimmt werden kann.

Entgegen bisheriger Annahmen hat sich dabei überraschenderweise gezeigt, dass es sehr wohl möglich ist, weitere Bestandteile, insbesondere Alkohole, während der Synthese von Keton-Aldehyd-Kondensationsharzen in die Polymerkette einzubauen. Ohne daran gebunden zu sein, ist anzunehmen, dass der Einbau mechanistisch über eine Michael-Addition stattfindet. Die mechanistische Beschreibung ist dem Fachmann bekannt und findet sich in der einschlägigen Fachliteratur unter den Stichworten Aldolkondensation / Michael-Addition, so beispielsweise in Laue/Plagens, Named Organic Reactions, John Wiley & Sons, 2005, Edition 2, Seite 4 ff und Seite 201 ff. Durch die Kondensation von Keton und Formaldehyd gebildete Vinylketone bieten in alkalischer Umgebung die Möglichkeit zum Angriff einer OH-funktionalen Verbindung (hier gezeigt am Beispiel eines Methylisobutylketon-basierten Harzes):

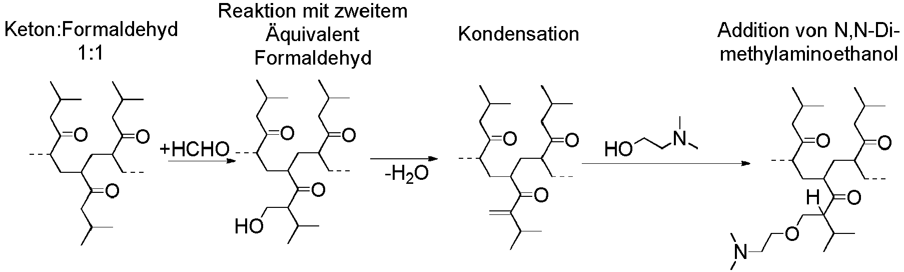

Durch den Einsatz entsprechend funktionalisierter Alkohole erlaubt die beschriebene Technologie somit die (in-situ) Funktionalisierung von Keton-Aldehyd-Harzen.

Als Aldehyde für die Herstellung der erfindungsgemäßen Kondensationsharze eignen sich unverzweigte oder verzweigte Aldehyde, vorzugsweise ausgewählt aus der Gruppe bestehend aus Formaldehyd-, Acetaldehyd, n-Butyraldehyd und/oder iso-Butyraldehyd, Valerianaldehyd sowie Dodecanal oder Mischungen daraus. In einer besonders bevorzugten Ausführungsform ist Formaldehyd als Aldehyd in den erfindungsgemäßen Harzen enthalten, entweder allein oder in Mischungen mit den vorab genannten Aldehyden. Auch die Verwendung von Formaldehyddonor wie Trioxan oder Paraformaldehyd ist möglich, wobei der Einsatz von Paraformaldehyd bevorzugt ist. Das benötigte Formaldehyd kann beispielsweise auch als ca. 20 bis 40 Gew.-%-ige alkoholische (z. B. Methanol oder Butanol) Lösung eingesetzt werden. Im Rahmen der vorliegenden Erfindung können insbesondere auch unterschiedliche Formen an Formaldehyd eingesetzt werden, beispielweise eine Kombination aus Paraformaldehyd und einer Lösung.

Als Ketone zur Herstellung der erfindungsgemäßen Kondensationsharze eignen sich grundsätzlich alle aus der Literatur bekannten CH-aciden Ketone oder Mischungen daraus. Voraussetzung für die im erfindungsgemäßen Verfahren verwendbaren Ketone ist, dass eine Möglichkeit zur Anbindung an die bei der Kondensation aufgebaute Polymerkette sowie gleichzeitig eine Möglichkeit zur Reaktion mit z. B. Formaldehyd/Alkohol am selben Molekül gegeben ist. Das eingesetzte Keton sollte dabei dem Postulat der Michael Addition folgend, mindestens zwei, vorzugsweise mehr, CH-acide Protonen aufweisen. Dadurch wird erreicht, dass das Keton mindestens zweimal mit Formaldehyd reagieren kann. Bevorzugt weist das Keton auf einer Seite der Ketogruppe drei C-H-acide Protonen oder auf den zwei Seiten der Ketogruppe jeweils mindestens zwei C-H-acide Protonen auf.

Geeignete Ketone sind Aceton, Acetophenon, ortho-, meta oder para-Phenylacetophenon, Methylethylketon, 3-Pentanon, 2-Heptanon, 3-Heptanon, 4-Heptanon, 2-Oktanon, 3-Oktanon, 2-Undecanon, 5-Methylhexan-2-on (Methylisoamylketon) oder 4-Methylpentan-2-on (Methylisobutylketon), Cyclopentanon, Cyclododecanon, Mischungen aus 2,2,4- und 2,4,4-Trimethylcyclopentanon, Cycloheptanon, Cyclooctanon, Cyclohexanon, o-, m- oder p-Methoxyacetophenon, o-, m- oder p-[*N*,*N*-Dialkylaminophenyl]ethanon, sowie alkylsubstituierte Cyclohexanone, wie 4-tert.-Amylcyclohexanon, 2-sek. Butylcyclohexanon, 2-tert.-Butylcyclohexanon, 4-tert.-Butylcyclohexanon, 2-Methylcyclohexanon und 3,3,5-Trimethylcyclohexanon oder Dione, wie zum Beispiel Acetylaceton. Die genannten Ketone können auch als Mischungen vorliegen.

Außerdem können als Keton-Komponente auch die als Schiffsche Basen bezeichneten Addukte eingesetzt werden, die aus der Reaktion von Ketonen und primären Aminen erhalten werden. Die eingesetzten primären Amine können selbst weitere organische Reste oder Funktionalitäten wie beispielsweise Amine enthalten. Derartige Verbindungen sind beispielsweise in US7723493 oder WO2012020028 beschrieben.

Im Rahmen der vorliegenden Erfindung hat sich gezeigt, dass prinzipiell ein sich am Polymerkettenende befindliches Keton ausreicht um eine einfache Funktionalisierung (eine Funktionalität pro Kettenende) zu erreichen, nachfolgend dargestellt am Beispiel eines Formaldehyd/Acetophenon-Harzes:

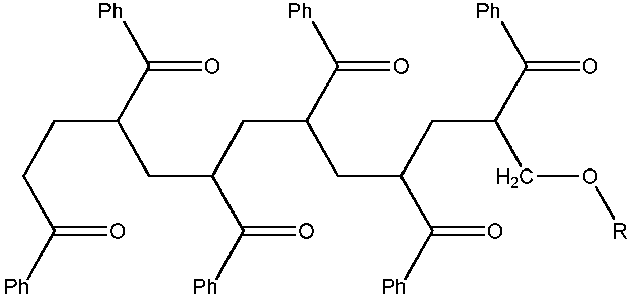

Im Falle von z. B. 4-Methylpentan-2-on (Methylisobutylketon) ist dagegen die Funktionalisierung auch entlang der Polymerkette, und damit nicht nur an den Kettenenden möglich:

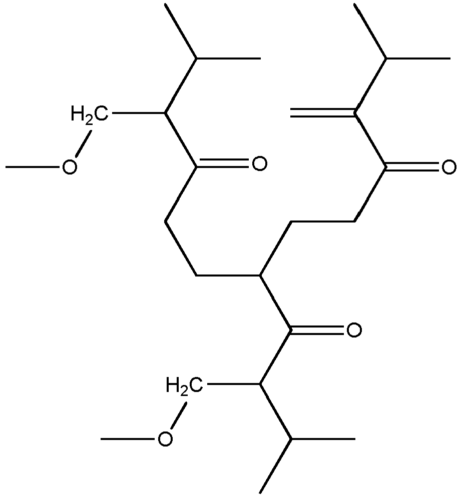

Das Verfahren der vorliegenden Erfindung erlaubt somit eine individuelle und den Bedürfnissen an das Produkt angepasste Funktionalisierung. So lässt sich je nach Wahl der eingesetzten Komponenten eine Funktionalisierung an den Kettenenden und/oder entlang der Polymerkette erzielen. Soll bei dem erfindungsgemäßen Verfahren neben der Funktionalisierung entlang der Polymerkette gleichzeitig ein Molekulargewichtsaufbau erreicht werden, werden vorzugsweise überstöchiometrische Mengen an Aldehyd, insbesondere an Formaldehyd, in dem erfindungsgemäßen Verfahren eingesetzt.

Der Bereich für das molare Aldehyd- zu Keton-Verhältnis liegt im Rahmen der vorliegenden Erfindung in der Regel im Bereich von 1:1 bis 3,5:1, bevorzugt im Bereich von 1,1:1 bis 2,5:1.

Bei der Synthese der Keton-Aldehyd-Harze kann als weitere Komponente auch Harnstoff und/oder dessen Derivate als Komponente eingesetzt werden, so dass funktionalisierte Keton-Aldehyd-Harnstoff-Harze erhalten werden.

Geeignete Aminoalkohole und Derivate, z. B. Amide, sind *N*,*N*-Dimethylaminoethanol (z. B. Lupragen® N 101), Trimethylaminoethylethanolamin, 3-Dimethylaminopropan-1-ol, Butyldiethanolamin, Butylethanolamin, Dibutylethanolamin, Diethylethanolamin, Ethylethanolamin, Dimethylaminoethoxyethanol (von BASF SE unter dem Namen Lupragen® N 107 vertrieben), Methyldiethanolamin, *N,N*-Dimethylisopropanolamin, *N*-Methylethanolamin, Diethanolamin,, Diisopropanolamin, Triisopropanolamin, *N*-(2-Hydroxyethl)piperidin, Düsopropanol-p-toluidin, *N*,*N-*Di-(2-hydroxyethyl)anilin, *N*-(2-Hydroxyethyl)anilin, 2-(2-Aminoethoxy)ethanol, 3-Amino-1-propanol, 5-Amino-1-pentanol, Monoethanolamin, *N*-(2-Aminoethyl)ethanolamin, Isopropanolamin oder 2,2'-(Phenylamino)diethanol. Entsprechende cyclische Derivate sind insbesondere ausgewählt aus der Gruppe der Piperazine und Morpholine, wie z. B. 1-(2-Hydroxyethyl)piperazin oder 4-(2-Hydroxyethyl)morpholin. In einer weiteren Ausführungsform des erfindungsgemäßen Verfahrens kann auch das Keton selbst OH-funktionalisiert sein, beispielsweise bei Einsatz von Hydroxyaceton.

Weitere vorstellbare OH-funktionalisierte Ketone können 4-Hydroxy-4-Methyl-2-Pentanon, 4- Hydroxy-2-butanon, 4-Hydroxy-3-methyl-2-butanon, 4-Hydroxy-2-Pentanon, 4-Hydroxy-3-(hydroxymethyl)-2-butanon, 1-Hydroxy-3-pentanon, 3,4-Dihydroxy-2-Butanon, 1-Hydroxy-2-Propanon, 1,3-Dihydroxy-2-Propanon, 1-Hydroxy-2-butanon, Rheosmin, Acetoin, 2'- Hydroxyacetophenon, 3'-Hydroxyacetophenon, 4'-Hydroxyacetophenon sein.

Alternativ kann die OH-Funktionalität bei der Durchführung der Reaktion freigesetzt werden, beispielsweise bei Einsatz von cyclischen Estern, beispielsweise Lactonen, die wiederum entlang des Kohlenstoffgerüstes funktionalisiert sein können. Dabei erfolgt in-situ eine Ringöffnung des Lactons und Angriff der OH-Funktionalität.

Typischerweise werden 0,1 bis 10 mol Alkohol pro Mol Keton eingesetzt, bevorzugt 0,2 bis 5 mol Alkohol pro Mol Keton.

Zur Harzsynthese können alle bekannten Verfahren Anwendung finden. Üblicherweise wird in Gegenwart alkalischer Katalysatoren bei Temperaturen zwischen 40 und 120 °C kondensiert. Solche Umsetzungen sind z. B. in Ullmann's Encyclopädie der technischen Chemie Bd. 12, Verlag Chemie Weinheim, 1976, Seiten 547 bis 555 beschrieben.

Die Umsetzung in Verfahren gemäß der vorliegenden Erfindung wird vorzugsweise in einem basischen Milieu durchgeführt. Als Katalysatoren für die Polykondensation werden insbesondere stark basische Verbindungen verwendet. Bevorzugt einsetzbare basische Katalysatoren sind z. B. Alkalihydroxide und Alkalimethylate, wie z. B. Kaliumhydroxid, Natriumhydroxid, Kaliummethylat oder Natriummethylat. Weitere bevorzugt einsetzbare basische Katalysatoren sind quaternäre Ammoniumverbindungen wie Tetramethylammoniumhydroxid, Tetraethylammoniumhydroxid oder Tetrabutylammoniumhydroxid.

Die basischen Katalysatoren werden insbesondere in Mengen von ≥ 0,025 Mol-%, vorzugsweise ≥ 0,05 Mol-% und insbesondere in Mengen von ≥ 0,10 Mol-%, bezogen auf das Keton, in der Reaktionsmischung eingesetzt.

In einer weiteren bevorzugten Ausführungsform der vorliegenden Erfindung wird bei den erfindungsgemäßen Verfahren ein Phasentransferkatalysator der allgemeinen Formel 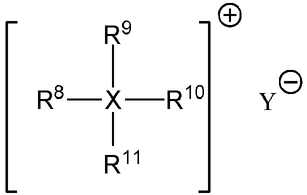 eingesetzt, wobei X ein Stickstoff- oder Phosphoratom ist, R⁸ ein Phenyl- oder ein Benzylrest ist, R⁹, R¹⁰, R¹¹ gleich oder verschieden und ausgewählt aus Alkylresten mit 1 bis 22 C-Atomen in der Kohlenstoffkette, Phenyl- oder Benzylresten sein können und Y das Anion einer anorganischen oder organischen Säure oder ein Hydroxidion bedeutet.

Für den Fall quaternärer Ammoniumsalze sind R⁹, R¹⁰, R¹¹ insbesondere Alkylreste mit 1 bis 22 C-Atomen, insbesondere solche mit 1 bis 12 C-Atomen, in der Kohlenstoffkette und/oder Phenyl- und/oder Benzylreste bevorzugt. Beispiele quaternärer Ammoniumsalze sind, Cetyldimethylbenzylammoniumchlorid, Tri-butylbenzylammoniumchlorid, Trimethylbenzylammoniumchlorid, Trimethylbenzylammoniumjodid, Triethylbenzylammoniumchlorid oder Triethylbenzylammoniumjodid. Als quaternäre Phosphoniumsalze kommen z. B. Triphenylbenzylphosphoniumchlorid oder Triphenylbenzylphosphoniumjodid in Frage. Vorzugsweise wird Benzyltributylammoniumchlorid eingesetzt. Für quaternäre Phosphoniumsalze sind R⁹, R¹⁰, R¹¹ vorzugsweise Alkylreste mit 1 bis 22 C-Atomen und/oder Phenylreste und/oder Benzylreste. Als Anionen kommen solche starker anorganischer oder organischer Säuren in Frage, insbesondere Cl-, Br-, J-Anionen aber auch Hydroxide, Methoxide oder Acetate.

Der Phasentransferkatalysator wird vorzugsweise in Mengen von 0,01 bis 15 Massen-%, vorzugsweise von 0,1 bis 10,0 Massen-% und insbesondere in Mengen von 0,1 bis 5,0 Massen-%, bezogen auf das eingesetzte Keton, in den erfindungsgemäßen Verfahren eingesetzt.

Die Umsetzung kann darüber hinaus in einem Hilfslösemittel stattfinden. Als geeignete Lösemittel haben sich beispielsweise Methanol oder Ethanol erwiesen. Es ist jedoch auch möglich, Hilfslösemittel zu verwenden, die sich während der Reaktion ebenfalls umsetzen lassen. Ein Beispiel hierfür ist Methylethylketon. Besonders bevorzugt erfolgt die Kondensation gemäß der vorliegenden Erfindung in Gegenwart von Methanol und/oder Ethanol. Einige der vorab für die Funktionalisierung geeigneten Alkohole sind selbst mit z. B. Wasser kompatibel, so dass auf den Einsatz der vorab genannten Hilfslösemittel verzichtet werden kann.

Darüber hinaus ist auch die Zugabe von Lösungsvermittlern zwischen nukleophiler Komponente, also dem zur Funktionalisierung eingesetzten Alkohol, und wässrigem Reaktionsgemisch möglich, z. B. durch Einsatz von 1,4-Dioxan aber auch polymerer Löslichkeitsvermittler.

Die Umsetzung findet bei Temperaturen zwischen 40 °C und 120 °C statt, besonders bevorzugt zwischen 60 °C und 95 °C.

Durch Variation der Mengenverhältnisse von Aldehyd und Keton innerhalb der Grenzen der vorliegenden Erfindung lassen sich Harzeigenschaften wie Glasübergangstemperatur und Molgewicht einstellen.

In einer besonders bevorzugten Ausführungsform der vorliegenden Erfindung wird als Aldehyd 30-%ige wässrige Formaldehydlösung und als Keton Methylisobutylketon eingesetzt. Das bevorzugte molare Verhältnis von Keton zu Aldehyd beträgt in dieser Ausführungsform 1 : 1,9 bis 1 : 2,1. In der bevorzugten Ausführungsform wird als Phasentransferkatalysator Benzyltributylammoniumchlorid eingesetzt. Die bevorzugte eingesetzte Menge an Benzyltributylammoniumchlorid beträgt 0,1 bis 0,5 Massen-% bezogen auf Methylisobutylketon. In der bevorzugten Ausführungsform wird als Alkohol zur Funktionalisierung *N*,*N*-Dimethylaminoethanol verwendet. Das bevorzugte molare Verhältnis von *N*,*N*-Dimethylaminoethanol zu Methylisobutylketon beträgt 1:1 bis 2:1. Als basischer Katalysator wird bevorzugt Natronlauge als 50 Gewichts-%-ige Lösung in einer bevorzugten Menge größer 0,15 Mol-%, bezogen auf Methylisobutylketon, eingesetzt. Die Kondensation findet bevorzugt ohne Einsatz eines weiteren Hilfslösemittels statt. Das Produkt kann auf fachmännische Art und Weise durch Destillation, Separation und/oder Waschungen aufgearbeitet werden.

Gegebenenfalls kann ein geeigneter Katalysator zur Herstellung der erfindungsgemäßen Harze eingesetzt werden. Geeignet sind alle in der Literatur bekannten Verbindungen, die einen Einbau des Alkohols in die Polymerkette beschleunigen. Beispiele hierfür sind Amine wie z. B. 4-*N,N-*Dimethylaminopyridin oder Amidin-oder Guanidingruppen tragende Verbindungen, wie beispielsweise die Verbindung 1,8-Diazabicyclo[5.4.0]undec-7-en (DBU).

Ebenfalls Gegenstand der vorliegenden Erfindung sind funktionalisierte Harze, erhältlich mit dem vorab beschriebenen Verfahren.

Die erfindungsgemäßen Harze weisen allgemein Glasübergangstemperaturen von -80 °C bis +140 °C auf, bevorzugt von -70 °C bis +120 °C, bestimmt nach DIN 53765.

Die erfindungsgemäßen Harze haben relative Molmassen Mn zwischen 200 und 20000 g/mol, bevorzugt zwischen 300 und 10000 g/mol, besonders bevorzugt zwischen 350 und 5000 g/mol.

Die relativen Molmassen werden durch Größenausschlußchromatographie (SEC) bestimmt. Dazu werden drei Säulen von Merck (PS 400, 250*7 mm, PS 40, 250*7 mm, und PS 1, 250*7 mm) mit einer Teilchengröße von 5 µm in Reihe kombiniert. Nach der Kalibration werden 20 µl der Kondensationsharzlösung in Tetrahydrofuran (c_{Kondensationsharz} = 20 mg/ml) bei 40 °C mit einem Rheodyne 7125 Injektor injiziert und mit einer Flußrate von 1 ml/min (HPLC Pumpe 510 von Waters) bei 40 °C mit entgastem Tetrahydrofuran als mobiler Phase und einem Differentialrefraktometer bei 40 °C (Model 410 von Waters) analysiert. Die Auswertung erfolgt nach Kalibration gegen Polystyrolstandards, die in der zuvor beschriebenen Weise durchgeführt wird. Polystyrolstandards (Standard 1 Mp 377400, Mp 96000, Mp 20650, Mp 1300, Mp 162; Standard 2 Mp 283300, Mp 50400, Mp 10850, Mp 2930, Mp 980; Standard 3 Mp 218800, Mp 68900, Mp 10050, Mp 1940, Mp 580; Mp = Molare Masse im Peakmaximum) sind beispielsweise bei Merck oder Polymer Laboratories kommerziell erhältlich.

Die erfindungsgemäßen Harze können unter Verwendung geeigneter Katalysatoren, welche die Hydrierung der Carbonylgruppe erlauben, zu Carbonyl-hydrierten Harzen umgewandelt werden. Ein geeignetes Verfahren hierzu ist in DE 870022 beschrieben. Enthält das Keton-Aldehyd-Harz aromatische Komponenten ist durch Verwendung geeigneter Katalysatoren die Herstellung von Kern- und Carbonyl-hydrierten Harzen möglich, wie beispielsweise in DE102006026758 beschrieben. Die Hydrierung der Carbonylgruppen führt zur Einführung (weiterer) Hydroxyfunktionalitäten. Durch die teilweise oder vollständige Carbonylhydrierung der Keton-Aldehydharze kann das Eigenschaftsprofil der Harze angepasst werden wie z. B. die Löslichkeitseigenschaften in polaren und unpolaren Lösemitteln.

Die erhaltenen funktionalisierten Harze können in Beschichtungsanwendungen verwendet werden, insbesondere handelt es sich bei den Beschichtungsanwendungen um Farben, Lacke oder Pigmentpasten.

Die erhaltenen funktionalisierten Harze eignen sich insbesondere für die Verwendung in Druckfarben. Hier hat sich gezeigt, dass sich durch den Einsatz der erfindungsgemäßen Harze eine Eigenschaftsverbesserung der Drucke erzielen lässt. Eigenschaftsverbesserungen werden beispielsweise in der Haftung der Beschichtung zum Substrat oder im Glanz erzielt.

Harze, welche durch den Einsatz ungesättigter Alkohole mit reaktiven Doppelbindungen funktionalisiert wurden, eignen sich zum Einsatz als radikalisch härtbare Harze. Zur Härtung derartiger Harze lassen sich thermische Initiatoren wie beispielsweise Azo-bis-isobutyronitril oder Photoinitiatoren, gegebenenfalls in Gegenwart geeigneter Photosensibilisatoren durch Bestrahlung verwenden. Dabei werden die Harze in polymere, unlösliche Harze überführen, die je nach Gehalt der ungesättigten Gruppen Elastomere bis Duroplaste ergeben.

Ein weiterer Gegenstand der vorliegenden Erfindung ist die Verwendung der erfindungsgemäßen Harze als Pigmentnetz- und/oder Dispergierharze, wobei es sich insbesondere um lösemittelhaltige Pigmentpasten handelt. Somit eignen sich die erfindungsgemäßen Harze als Anreibeharze für Feststoffanreibungen, beispielsweise auf Basis von Füllstoffen oder Pigmenten.

Zusammensetzungen enthaltend Harze gemäß der vorliegenden Erfindung gehören ebenfalls zum Gegenstand der vorliegenden Erfindung. Insbesondere enthalten die erfindungsgemäßen Zusammensetzungen zusätzlich Pigmente. In einer besonders bevorzugten Ausführungsform bestehen die Zusammensetzungen aus Harzen gemäß der vorliegenden Erfindung und Pigmenten.

Bevorzugte Feststoffe sind Füllstoffe, wie zum Beispiel Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen und Biozid, Agrochemikalien und Pharmaka, wie zum Beispiel Fungizide.

Weitere bevorzugte Feststoffe sind anorganische und organische Pigmente. Beispiele für anorganische Pigmente sind Ruße, Titandioxide, Zinkoxide, Preußischblau, Eisenoxide, Cadmiumsulfide, Chrompigmente, wie zum Bei-spiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt. Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phtalocyaninpigmente. Weitere Beispiele für organische Pigmente werden in dem Buch "W. Herbst, K. Hunger, Industrial Organic Pigments, VCH, Weinheim (1993)" genannt.

Es hat sich gezeigt, dass eine breite Verträglichkeit der erfindungsgemäßen Harze mit weiteren Bestandteilen, bevorzugt Bindemitteln, von Beschichtungsstoffen und/oder Klebstoffen und/oder Dichtmassen besteht. Als Beschichtungsstoffe, in denen die erfindungsgemäßen Pigmentpräparationen bevorzugt eingebracht werden können, kommen alle dem Fachmann bekannten lösemittelhaltigen und lösemittelfreien Systeme in Betracht. Diese Systeme können beispielsweise physikalisch trocknend, oxidativ trocknend oder anderweitig reaktiv in 1 K- oder 2K-Lacken sein.

Beispiele für Bindemittel sind lang-, mittel- und kurzölige Alkyde, selbstvernetzende und 2-Komponenten Acrylate, Polyester-Melamin-Systeme, 2-Komponenten Polyurethane und 2 Komponenten Epoxide.

Somit ist die Verwendung von Zusammensetzungen gemäß der vorliegenden Erfindung zur Herstellung von Lacken und Druckfarben oder Drucklacken und Beschichtungsstoffen ebenfalls Gegenstand der vorliegenden Erfindung.

Die vorab beschriebenen Messmethoden gelten für alle Ausführungsformen der vorliegenden Erfindung. Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Messmethoden:

Zur Bestimmung von Parametern oder Messwerten werden vorzugsweise die nachfolgend beschriebenen Methoden verwendet. Etwaige weitere Methoden können aus der Beschreibung entnommen werden.

OH-Zahlen wurden nach DIN 53240-2 bestimmt. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die angegebenen Viskositäten wurden mit einem Anton Paar Rotationsviskosimeter M102 und der Messgeometrie CP50/2 bei 23 ° C und einer Scherrate von 1/100s bestimmt. Hierzu wurde eine Mischung aus Butylacetat und Methoxypropylacetat im Verhältnis 1:1 Massenanteilen angesetzt. 80 Gew-% der Harze wurden in der Butylacetat/Methoxypropylacetat-Mischung gelöst. Die Lösungserstellung kann dabei durch Erwärmen der Harz-Lösemittelmischung auf bis zu 70 °C beschleunigt werden. Die erhaltenen Harz-Lösungen wurden der Viskositätsmessung nach vorherig genannter Methode unterzogen.

Aminzahlen wurden nach DIN 53176 bestimmt. Hierbei handelt es sich um eine potentiometrische Titration. Die Aminzahl gibt die Menge KOH in mg an, die theoretisch benötigt wird, um die Menge Salzsäure, die 1 g der zu untersuchenden Probe neutralisiert, zu neutralisieren.

lodzahlen wurden nach DIN 53241-1 bestimmt. Die Jodzahl beschreibt die Menge Iod in Gramm, die formal an 100 g der zu untersuchenden Substanz addiert werden kann. Die Iodzahl ist daher ein Maß für den ungesättigten Charakter einer Substanz.

### Vergleichsbeispiel 1 - Kondensationsharz aus Formaldehyd, Methylisobutylketon und 2-Allyloxyethanol

100,2 g Methylisobutylketon, 100,1 g Formaldehydlösung (30 Gew.-% in Wasser) und 234,9 g 2-Allyloxyethanol wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 20,0 g Natronlauge (50 Gew.-%) gestartet. Anschließend wurde die Reaktionsmischung bis zum Rückfluss aufgeheizt. Nach Erreichen des Rückflusses wurden 100,1 g einer Formaldehydlösung (30 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde dreimal mit Wasser gewaschen, wobei dem ersten Waschwasser 1 ml Eisessig zugefügt wurde. Abschließend wurde 60 min bei 165 °C und 40 mbar am Rotationsverdampfer destilliert. Die Jodzahl zeigt die Bildung eines En-funktionales Kondensationsharzes an.
Iodzahl 36 g Iod / 100 g
Signale bei 5,2 und 5,8 ppm im 1H NMR Spektrum, gemessen in CDl₃ zeigen den Einbau der ungesättigten Komponente an.
Mn = 570 g/mol
Mw = 730 g/mol
OH-Zahl 12 mg KOH / g
Glasübergangstemperatur -31 °C

### Beispiel 2 - Kondensationsharz aus Formaldehyd, Methylisobutylketon und N,N-Dimethylethanolamin

300,5 g Methylisobutylketon, 298,3 g Formaldehydlösung (30,2 Gew.-% in Wasser), 507 g Dimethylethanolamin und 0,75 g Benzyltributylammoniumchlorid wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 60,0 g Natronlauge (50 Gew.-%) gestartet. Anschließend wurde die Reaktionsmischung bis zum Rückfluss aufgeheizt. Nach Erreichen des Rückflusses wurden 298,3 g einer Formaldehydlösung (30,2 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde 16-mal mit Wasser gewaschen, wobei dem ersten Waschwasser 30 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 27 mg KOH/g
Mn = 620 g/mol
Mw = 910 g/mol
OH-Zahl 16,6 mg KOH / g
Glasübergangstemperatur 14°C
Viskosität (80 Gew.-% in Butylacetat / Methoxypropylacetat) bei 23 °C: 3529 mPas

### Vergleichsbeispiel 3 - Kondensationsharz aus Formaldehyd, Methylisobutylketon und Glycerin

400,6 g Methylisobutylketon, 397,7 g Formaldehydlösung (30,2 Gew.-% in Wasser), 914,3 g Glycerin und 1 g Benzyltributylammoniumchlorid wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 80,0 g Natronlauge (50 Gew.-%) gestartet. Anschließend wurde die Reaktionsmischung bis zum Rückfluss aufgeheizt. Nach Erreichen des Rückflusses wurden 397,7 g einer Formaldehydlösung (30,2 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde viermal mit Wasser gewaschen, wobei dem ersten Waschwasser 2 ml Eisessig zugefügt wurden. Abschließend wurde 60 min bei 165 °C und 40 mbar am Rotationsverdampfer destilliert. Es wurde ein OH-funktionales Kondensationsharz erhalten.
OH-Zahl 134,8 mg KOH / g
Mn = 510 g/mol
Mw = 630 g/mol
Glasübergangstemperatur -15°C
Viskosität (80 Gew.-% in Butylacetat / Methoxypropylacetat) bei 23 °C: 664 mPas
OH-Zahl 75,1 mg KOH / g

### Beispiel 4 - Kondensationsharz aus Formaldehyd, Methylisobutylketon und N,N-Dimethylethanolamin in Gegenwart von DBU

150,2 g Methylisobutylketon, 148,7 g Formaldehydlösung (30,3 Gew.-% in Wasser), 7,5 g DBU und 0,38 g Benzyltributylammoniumchlorid wurden in einem Dreihalskolben mit Rührer, Rückflusskühler und Thermofühler in Stickstoffatmosphäre vorgelegt. Anschließend wurde 332,3 g N,N-Dimethylethanolamin bei leichter Exothermie zugetropft. Nach Erwärmen auf 40 °C wurde die Reaktion durch Zugabe von 30,0 g Natronlauge (50 Gew.-%) gestartet. Anschließend wurde die Reaktionsmischung bis zum Rückfluss aufgeheizt. Nach Erreichen des Rückflusses wurden 148,7 g einer Formaldehydlösung (30,3 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde elfmal mit Wasser gewaschen, wobei dem ersten Waschwasser 8 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 41 mg KOH/g
Mn = 680 g/mol
Mw = 950 g/mol
OH-Zahl 13,6 mg KOH / g
Glasübergangstemperatur 22°C
Viskosität (80 Gew.-% in Butylacetat / Methoxypropylacetat) bei 23 °C: 7814 mPas

### Beispiel 5 - Kondensationsharz aus Paraformaldehyd, Methylisobutylketon und N,N-Dimethylethanolamin (nicht erfindungsgemäß)

147,3 g p-Formaldehyd (95,8 Gew.-%) und 211,7g N,N-Dimethylethanolamin wurden in einem Dreihalskolben mit Rührer, Rückflusskühler und Thermofühler in Stickstoffatmosphäre vorgelegt. Nach Erwärmen auf 50 °C wurde die Reaktion durch Zugabe von 55,0 g Natronlauge (50 Gew.-%) gestartet. Anschließend wurde 250,4 g Methylisobutylketon zugetropft, danach wurden 20,0 g Natronlauge (50 Gew.-%) zugetropft. Danach wurde die Reaktionsmischung 4,5 Stunden unter Rückfluss gehalten, dann mit 410 ml Wasser versetzt und fünf Minuten nachgerührt. Dann wurde der Rührer abgeschaltet. Nach Separation der Phasen wurde die wässrige Phase abgetrennt. Das Rohprodukt wurde sechsmal mit Wasser gewaschen, wobei dem ersten Waschwasser 8 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 31,2 mg KOH / g
Mn = 700 g/mol
Mw = 1100 g/mol
OH-Zahl 3,8 mg KOH / g
Glasübergangstemperatur 27°C
Viskosität (80 Gew.-% in Butylacetat / Methoxypropylacetat) bei 23 °C: 15052 mPas

### Beispiel 6 - Kondensationsharz aus Paraformaldehyd, Methylisobutylketon und N,N-Dimethylethanolamin in Gegenwart von DBU (nicht erfindungsgemäß)

147,3 g p-Formaldehyd (95,8 Gew.-%), 12,5 g DBU und 211,7g N,N-Dimethylethanolamin wurden in einem Dreihalskolben mit Rührer, Rückflusskühler und Thermofühler in Stickstoffatmosphäre vorgelegt. Nach Erwärmen auf 50 °C wurde die Reaktion durch Zugabe von 55,0 g Natronlauge (50 Gew.-%) gestartet. Anschließend wurde 250,4 g Methylisobutylketon zugetropft, danach wurden 20,0 g Natronlauge (50 Gew.-%) zugetropft. Danach wurde die Reaktionsmischung 4,5 Stunden unter Rückfluss gehalten, dann mit 410 ml VE-Wasser versetzt und fünf Minuten nachgerührt. Dann wurde der Rührer abgeschaltet. Nach Separation der Phasen wurde die wässrige Phase abgetrennt. Das Rohprodukt wurde achtmal mit Wasser gewaschen, wobei dem ersten Waschwasser 8 ml und beim fünften Waschwasser 2 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 38,2 mg KOH / g
Mn = 690 g/mol
Mw = 1000 g/mol
OH-Zahl 11,0 mg KOH / g
Glasübergangstemperatur 24°C
Viskosität (80 Gew.-% in Butylacetat / Methoxypropylacetat) bei 23 °C: 11081 mPas

### Beispiel 7 - Kondensationsharz aus Formaldehyd, Methylisobutylketon und Methyldiethanolamin

300,5 g Methylisobutylketon, 303,3 g Formaldehydlösung (29,7 Gew.-% in Wasser) und 0,75 g Benzyltributylammoniumchlorid wurden in einem Dreihalskolben mit Rührer, Rückflusskühler und Thermofühler in Stickstoffatmosphäre vorgelegt. Anschließend wurde 376,4 g Methyldiethanolamin bei leichter Exothermie zugetropft. Nach Erwärmen auf 40 °C wurde die Reaktion durch Zugabe von 60,0 g Natronlauge (50 Gew.-%) gestartet. Anschließend wurde die Reaktionsmischung bis zum Rückfluss aufgeheizt. Nach Erreichen des Rückflusses wurden 303,3 g einer Formaldehydlösung (29,7 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde sechsmal mit Wasser gewaschen, wobei dem zweiten Waschwasser 6 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 43,5 mg KOH/g
Mn = 550 g/mol
Mw = 770 g/mol
OH-Zahl 54 mg KOH / g
Glasübergangstemperatur -1°C
Viskosität (80 Gew.-% in Butylacetat / Methoxypropylacetat) bei 23 °C: 1662 mPas

### Beispiel 8 - Kondensationsharz aus Formaldehyd, Methylisobutylketon, Aceton, Methylethylketon (MEK) und N,N-Dimethylethanolamin

180,3 g Methylisobutylketon, 303,3 g Formaldehydlösung (29,7 Gew.-% in Wasser), 34,8 g Aceton, 43,3 g Methylethylketon und 0,75 g Benzyltributylammoniumchlorid wurden in einem Dreihalskolben mit Rührer, Rückflusskühler und Thermofühler in Stickstoffatmosphäre vorgelegt. Anschließend wurde 507 g N,N-Dimethylethanolamin bei leichter Exothermie zugetropft. Nach Erwärmen auf 40 °C wurde die Reaktion durch Zugabe von 60,0 g Natronlauge (50 Gew.-%) gestartet. Anschließend wurde die Reaktionsmischung bis zum Rückfluss aufgeheizt. Nach Erreichen des Rückflusses wurden 303,3 g einer Formaldehydlösung (29,7 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde sechsmal mit Wasser gewaschen, wobei dem zweiten Waschwasser 6 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 40,0 mg KOH/g
Mn = 720 g/mol
Mw = 1100 g/mol
OH-Zahl 24 mg KOH / g
Glasübergangstemperatur 45°C
Viskosität (80 Gew.-% in Butylacetat / Methoxypropylacetat) bei 23 °C: 5921 mPas

### Beispiel 9 - Kondensationsharz aus Formaldehyd, Methylisobutylketon und Trimethylaminoethylethanolamin

146,2 g Methylisobutylketon, 147,8 g Formaldehydlösung (29,7 Gew.-% in Wasser) und 0,37 g Benzyltributylammoniumchlorid wurden in einem Dreihalskolben mit Rührer, Rückflusskühler und Thermofühler in Stickstoffatmosphäre vorgelegt. Anschließend wurde 203,0 g Trimethylaminoethylethanolamin bei leichter Exothermie zugetropft. Nach Erwärmen auf 40 °C wurde die Reaktion durch Zugabe von 29,2 g Natronlauge (50 Gew.-%) gestartet. Anschließend wurde die Reaktionsmischung bis zum Rückfluss aufgeheizt. Nach Erreichen des Rückflusses wurden 147,8 g einer Formaldehydlösung (29,7 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde zehnmal mit Wasser gewaschen, wobei dem zweiten Waschwasser 4 ml und dem siebten Waschwasser 2 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 20,2 mg KOH/g
Mn = 640 g/mol
Mw = 920 g/mol
OH-Zahl 17 mg KOH / g
Glasübergangstemperatur 19°C
Viskosität (80 Gew.-% in Butylacetat / Methoxypropylacetat) bei 23 °C: 169034 mPas

### Beispiel 10 - Kondensationsharz aus Formaldehyd, Methylisobutylketon, 2-Heptanon, 3-Octanon, Methylethylketon (MEK) und N,N-Dimethylethanolamin

180,3 g Methylisobutylketon, 303,3 g Formaldehydlösung (29,7 Gew.-% in Wasser), 68,5 g 2-Heptanon, 76,9 g 3-Octanon und 0,75 g Benzyltributylammoniumchlorid wurden in einem Dreihalskolben mit Rührer, Rückflusskühler und Thermofühler in Stickstoffatmosphäre vorgelegt. Anschließend wurde 507 g N,N-Dimethylethanolamin bei leichter Exothermie zugetropft. Nach Erwärmen auf 40 °C wurde die Reaktion durch Zugabe von 60,0 g Natronlauge (50 Gew.-%) gestartet. Anschließend wurde die Reaktionsmischung bis zum Rückfluss aufgeheizt. Nach Erreichen des Rückflusses wurden 303,3 g einer Formaldehydlösung (29,7 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde zehnmal mit Wasser gewaschen, wobei dem zweiten Waschwasser 8 ml, dem fünften, siebten und achten Waschwasser jeweils 2 ml Eisessig zugefügt wurden. Abschließend wurde 60 min bei 165 °C und 40 mbar am Rotationsverdampfer destilliert. Es wurde ein Amin-funktionalisiertes Harz erhalten.
Aminzahl: 22,0 mg KOH/g
Mn = 560 g/mol
Mw = 750 g/mol
OH-Zahl 14 mg KOH / g
Glasübergangstemperatur -12 °C
Viskosität (80 Gew.-% in Butylacetat / Methoxypropylacetat) bei 23 °C: 748 mPas

### Vergleichsbeispiel - Kondensationsharz aus Formaldehyd, Methylethylketon und Ethylenglykol

250,4 g Methylisobutylketon, 247,8 g Formaldehydlösung (30,3 Gew.-% in Wasser), 775,8 g Ethylenglykol und 0,63 g Benzyltributylammoniumchlorid wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 50,0 g Natronlauge (50 Gew.-%) gestartet. Anschließend wurde die Reaktionsmischung bis zum Rückfluss aufgeheizt. Nach Erreichen des Rückflusses wurden 247,8 g einer Formaldehydlösung (30,3 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde zehnmal mit Wasser gewaschen, wobei dem zweiten Waschwasser 2,5 ml Eisessig zugefügt wurden. Abschließend wurde 30 min bei 165 °C und 40 mbar am Rotationsverdampfer destilliert. Es wurde ein OH-funktionalisiertes Harz erhalten.
Mn = 540 g/mol
Mw = 680 g/mol
OH-Zahl 73 mg KOH / g
Glasübergangstemperatur -6°C
Viskosität (80 Gew.-% in Butylacetat / Methoxypropylacetat) bei 23 °C: 803 mPas

### Anwendungsbeispiel

### Lackherstellung:

### a) Herstellung einer Premix Wax Dilution

Vorab wurde eine Premix Wax Dilution hergestellt (Tabelle 1). Hierfür wurden Ecocell 1/4 AS (28,6% in Ethylacetat, Firma Nitroquimica, 38 g), Vestowax H2050 SF (30 g, Firma Evonik Industries AG) und Ethanol (32 g) nacheinander unter dem Dissolver (Dispermat LC 75, VMA Getzmann) in einer 250 ml Glasflasche vermischt. Die Premix Wax Dilution wurde nach Zugabe der Komponenten 2 Stunden mit einer Rührgeschwindigkeit von 2500-3000 U/min dispergiert.

**Tabelle 1 Premix Wax Dilution**

| **Komponente** | **Zusammensetzung in %** |
|---|---|
| Ecocell 1/4 AS (28,6% in Ethylacetat) | 38 |
| Vestowax H 2050 SF | 30 |
| Ethanol | 32 |
| **Summe** | **100** |

### b) Herstellung von Nitrocelluloselacken

### b1) erfindungsgemäßer Lack

Das Amin-funktionalisierte Harz aus Beispiel 2 (4,0 g) wurde in einer 250 ml Glasflasche in Ethylacetat (10,3 g) gelöst. Im Anschluss wurde Ecocell 1/4 AS (28,6% in Ethylacetat, 18,70 g), Tego Dispers 710 (4,00 g, Firma Evonik Industries AG), Ethanol (7,00 g), Hexamoll DINCH (4,5 g, BASF SE) und das Pigment Special Black 4 (10,0 g, Orion) zur Lösung des Harzes aus Beispiel 2 zugegeben. Im Anschluss wurden ca. 59 g Glasperlen Ø 3 mm hinzugegeben, die Flasche wurde gut verschlossen und in den Rüttler gestellt. Der Lack wurde 1 Stunde gerüttelt. (**Schritt 1, Tabelle 2**)
Anschließend wurden nochmals Ecocell 1/4 AS (28,6% in Ethylacetat) (11,3 g), Ethylacetat (3,70 g), Premix Wax Dilution (6,70 g), Ethanol (13,3 g)und Methoxypropanol (6,50 g) hinzugewogen. Die Flasche wurde wieder gut verschlossen und für 15 Minuten auf einem Rüttler vermischt. Der Lack wurde mithilfe eines Schnellsiebes von den Glasperlen getrennt und am Folgetag appliziert. (**Schritt 2, Tabelle 2**)

### b2) Vergleichslack

Zu Vergleichszwecken wurde das Harz gemäß Vergleichsbeispiel nach gleicher Vorgehensweise angesetzt.

### b3) Vergleichslack ohne Harz

Ebenfalls zu Vergleichszwecken wurde ein Nitrocelluloselack ohne erfindungsgemäßes Harz nach gleicher Vorgehensweise angesetzt. Zur Herstellung einer Vergleichsprobe mit equivalentem Harzgehalt wurden die Mengen Ecocell 1/4 AS und Ethylacetat in Schritt 1 entsprechend angepasst.

Die Einsatzmengen der Komponenten sind in Tabelle 2 zusammengefasst.

**Tabelle 2: Zusammensetzungen der Nitrocelluloselacke**

| **Komponente** | **Vergleichslack ohne Harz Zusammensetzung in %** | **Erfindungsgemäßer Lack Zusammensetzung in %** | **Vergleichslack Zusammensetzung in %** |
|---|---|---|---|
| **Schritt 1** | | | |
| Ecocell1/4 AS (28% in Ethylacetat) | 32,7 | 18,7 | 18,7 |
| TEGO Dispers 710 | 4 | 4 | 4 |
| Ethanol | 7 | 7 | 7 |
| Harz gemäß Beispiel 2 | 0 | 4 | 0 |
| Harz gemäß Vergleichsbeispiel | 0 | 0 | 4 |
| Special Black | 10 | 10 | 10 |
| Ethylacetat | 0,3 | 10,3 | 10,3 |
| Hexamoll DINCH | 4,5 | 4,5 | 4,5 |

| **Schritt 2** | | | |
|---|---|---|---|
| Ecocell 1/4 AS (28,6% in Ethylacetat) | 11,3 | 11,3 | 11,3 |
| Ethylacetat | 3,7 | 3,7 | 3,7 |
| premix wax dilution | 6,7 | 6,7 | 6,7 |
| Ethanol | 13,3 | 13,3 | 13,3 |
| Methoxypropanol | 6,5 | 6,5 | 6,5 |
| **Summe** | **100** | **100** | **100** |

### Applikation:

Eine unbehandelte PP-Folie wurde in einem Corona-Gerät (Arcotec, Mönsheim, Coronagenerator Typ CG061-2) behandelt. Anschließend wurde ca. 1 g des Lacks auf die Corona-behandelte Folie gegeben und mit einem 13,7 µm Rakel appliziert. Die Trocknungszeit des Lackes betrug 1 - 2 Minuten.

Nach 5 Minuten wurde die Tesafestigkeit bestimmt, um die Beschichtung auf deren Haftungseigenschaft zu beurteilen. Marktüblich wird die Tesafestigkeit in Anlehnung an die ASTM D3359 folgendermaßen durchgeführt. Die beschichtete PP-Folie wird auf einen harten, glatten Untergrund gelegt. Ein Tesastreifen (Typ 4104, Beiersdorf, 20 mm Breite, mindestens 30 mm weit) wird quer zur Laufrichtung auf den Prüfling geklebt und gleichmäßig angedrückt. Unmittelbar nach dem Aufkleben wird der Klebestreifen ruckartig im Winkel von 90° abgezogen. Die Tesafestigkeit wird mit Ziffern von 1 bis 5 beurteilt:
5 = Beschichtung zieht nicht ab
4 = Beschichtung zieht an einigen Stellen punktförmig ab
3 = Beschichtung zieht an einzelnen Stellen deutlich ab
2 = Beschichtung zieht in größeren Flächen ab
1 = Beschichtung zieht vollständig ab

Nach zwei Stunden Trockenzeit wurde der Glanz nach DIN EN ISO 2813 gemessen. Die Ergebnisse zu Glanz angegeben in Glanzeinheiten (GE) sind ebenfalls in Tabelle 3 zusammengefasst.
Die Ergebnisse sind in Tabelle 3 zusammengestellt.

**Tabelle 3: Auswertung der PP-Folien**

| | **PP-Folie nach Beschichtung mit Vergleichslack ohne Harz** | **PP-Folie nach Beschichtung mit erfindungsgemäßem Lack** | **PP-Folie nach Beschichtung mit Vergleichslack** |
|---|---|---|---|
| Glanz 20° [GE] | 1,5 | 1,8 | 1,7 |
| Glanz 60° [GE] | 15,7 | 19,4 | 14,6 |
| Glanz 85° [GE] | 25,7 | 38,3 | 21 |
| Tesa-Abriss | 1 | 4 | 1 |

Das erfindungsgemäße Harz zeichnet sich durch eine Haftungsverbesserung sowie durch eine Erhöhung der Glanzwerte aus.

## Patentansprüche

1. Verfahren zur Herstellung funktionalisierter Harze mit relativen Molmassen Mn zwischen 200 und 20000 g/mol, welche durch Größenausschlußchromatographie (SEC) bestimmt werden, umfassend die Kondensation von Ketonen ausgewählt aus Aceton, Acetophenon, ortho-, meta oder para-Phenylacetophenon, Methylethylketon, 3-Pentanon, 2-Heptanon, 3-Heptanon, 4-Heptanon, 2-Oktanon, 3-Oktanon, 2-Undecanon, 5-Methylhexan-2-on (Methylisoamylketon), 4-Methylpentan-2-on (Methylisobutylketon), Cyclopentanon, Cyclododecanon, Mischungen aus 2,2,4- und 2,4,4-Trimethylcyclopentanon, Cycloheptanon, Cyclooctanon, Cyclohexanon, o-, m- oder p-Methoxyacetophenon, o-, m- oder p-[*N*,*N*-Dialkylaminophenyl]ethanon, sowie alkylsubstituierte Cyclohexanone, wie 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon oder Dione oder Mischungen hieraus, und Aldehyden in Gegenwart mindestens eines Aminoalkohols und dessen Derivate ausgewählt aus *N*,*N*-Dimethylaminoethanol, Trimethylaminoethylethanolamin, 3-Dimethylaminopropan-1-ol, Butyldiethanolamin, Butylethanolamin, Dibutylethanolamin, Diethylethanolamin, Ethylethanolamin, Dimethylaminoethoxyethanol, Methyldiethanolamin, *N*,*N-*Dimethylisopropanolamin, *N*-Methylethanolamin, Diethanolamin, Diisopropanolamin, Triisopropanolamin, *N*-(2-Hydroxyethl)piperidin, Düsopropanol-p-toluidin, *N,N*-Di-(2-hydroxyethyl)anilin, *N*-(2-Hydroxyethyl)anilin, 2-(2-Aminoethoxy)ethanol, 3-Amino-1-propanol, 5-Amino-1-pentanol, Monoethanolamin, *N*-(2-Aminoethyl)ethanolamin, Isopropanolamin oder 2,2'-(Phenylamino)diethanol, 1-(2-Hydroxyethyl)piperazin oder 4-(2-Hydroxyethyl)morpholin, deren Derivate oder Mischungen hieraus, wobei als Aldehyd eine 20 bis 40 Gew.-%ige wässrige Formaldehydlösung eingesetzt, der Alkohol kovalent in das Harz eingebunden und die Kondensation in situ durchgeführt wird.

2. Verfahren nach Anspruch 1, **dadurch gekennzeichnet, dass** das molare Aldehyd- zu Keton-Verhältnis im Bereich von 1:1 bis 3,5:1 liegt.

3. Verfahren nach Anspruch 2, **dadurch gekennzeichnet, dass** 0,1 bis 10 mol Alkohol pro Mol Keton eingesetzt werden.

4. Verfahren nach Anspruch 3, **dadurch gekennzeichnet, dass** in Gegenwart alkalischer Katalysatoren bei Temperaturen zwischen 40°C und 120 °C kondensiert wird.

5. Verfahren nach Anspruch 4, **dadurch gekennzeichnet, dass** als Aldehyd 30 Gew.-%ige wässrige Formaldehydlösung und als Keton Methylisobutylketon eingesetzt werden.

## Claims

1. Process for preparing functionalized resins having relative molar masses Mn between 200 and 20 000 g/mol which are determined by size exclusion chromatography (SEC), comprising the condensation of ketones selected from acetone, acetophenone, ortho-, meta- or para-phenylacetophenone, methyl ethyl ketone, 3-pentanone, 2-heptanone, 3-heptanone, 4-heptanone, 2-octanone, 3-octanone, 2-undecanone, 5-methylhexan-2-one (methyl isoamyl ketone), 4-methylpentan-2-one (methyl isobutyl ketone), cyclopentanone, cyclododecanone, mixtures of 2,2,4- and 2,4,4-trimethylcyclopentanone, cycloheptanone, cyclooctanone, cyclohexanone, o-, m- or p-methoxyacetophenone, o-, m- or *p*-[*N*,*N-*dialkylaminophenyl]ethanone, and alkyl-substituted cyclohexanones such as 4-tert-amylcyclohexanone, 2-sec-butylcyclohexanone, 2-tert-butylcyclohexanone, 4-tert-butylcyclohexanone, 2-methylcyclohexanone and 3,3,5-trimethylcyclohexanone or diones or mixtures thereof, and aldehydes in the presence of at least one amino alcohol and derivatives thereof, selected from *N*,*N*-dimethylaminoethanol, trimethyl-aminoethylethanolamine, 3-dimethylaminopropan-1-ol, butyldiethanolamine, butylethanolamine, dibutylethanolamine, diethylethanolamine, ethylethanolamine, dimethylaminoethoxyethanol, methyldiethanolamine, *N*,*N*-dimethylisopropanolamine, N-methylethanolamine, diethanolamine, diisopropanolamine, triisopropanolamine, *N*-(2-hydroxyethyl)piperidine, diisopropanol-p-toluidine, *N*,*N*-di(2-hydroxyethyl)aniline, *N*-(2-hydroxyethyl)-aniline, 2-(2-aminoethoxy)ethanol, 3-amino-1-propanol, 5-amino-1-pentanol, monoethanolamine, *N-*(2-aminoethyl)ethanolamine, isopropanolamine or 2,2'-(phenylamino)diethanol, 1-(2-hydroxyethyl)-piperazine or 4-(2-hydroxyethyl)morpholine, or derivatives or mixtures thereof, wherein the aldehyde used is a 20% to 40% by weight aqueous formaldehyde solution, the alcohol is incorporated covalently into the resin and the condensation is conducted in situ.

2. Process according to Claim 1, **characterized in that** the molar aldehyde to ketone ratio is in the range from 1:1 to 3.5:1.

3. Process according to Claim 2, **characterized in that** 0.1 to 10 mol of alcohol are used per mole of ketone.

4. Process according to Claim 3, **characterized in that** condensation is effected in the presence of alkaline catalysts at temperatures between 40 and 120°C.

5. Process according to Claim 4, **characterized in that** the aldehyde used is 30% aqueous formaldehyde solution and the ketone used is methyl isobutyl ketone.

## Revendications

1. Procédé de fabrication de résines fonctionnalisées ayant des masses molaires relatives Mn comprises entre 200 et 20 000 g/mol, qui sont déterminées par chromatographie d'exclusion stérique (SEC), comprenant la condensation de cétones choisies parmi l'acétone, l'acétophénone, l'ortho-, la méta ou la para-phénylacétophénone, la méthyléthylcétone, la 3-pentanone, la 2-heptanone, la 3-heptanone, la 4-heptanone, la 2-octanone, la 3-octanone, la 2-undécanone, la 5-méthylhexan-2-one (méthylisoamylcétone), la 4-méthylpentan-2-one (méthylisobutylcétone), la cyclopentanone, la cyclo-dodécanone, les mélanges de 2,2,4- et 2,4,4-triméthylcyclopentanone, la cycloheptanone, la cyclooctanone, la cyclohexanone, l'o-, la m- ou la p-méthoxy-acétophénone, l'o-, la m- ou la p-[*N*,*N-*dialkylaminophényl]éthanone, ainsi que les cyclohexanones à substitution alkyle, telles que la 4-tert.-amylcyclohexanone, la 2-sec.-butylcyclohexanone, la 2-tert.-butylcyclohexanone, la 4-tert.-butylcyclohexanone, la 2-méthylcyclohexanone et la 3,3,5-triméthylcyclohexanone ou les diones ou leurs mélanges, et d'aldéhydes en présence d'au moins un alcool aminé et ses dérivés choisis parmi le *N,N*-diméthylaminoéthanol, la triméthylaminoéthyléthanolamine, le 3-diméthylamino-propan-1-ol, la butyldiéthanolamine, la butyléthanol-amine, la dibutyléthanolamine, la diéthyléthanolamine, l'éthyléthanolamine, le diméthylaminoéthoxyéthanol, la méthyldiéthanolamine, la *N*,*N*-diméthylisopropanolamine, la *N*-méthyléthanolamine, la diéthanolamine, la diisopropanolamine, la triisopropanolamine, la *N*-(2-hydroxyéthyl)pipéridine, la diisopropanol-p-toluidine, la *N*,*N*-di-(2-hydroxyéthyl)aniline, la *N*-(2-hydroxyéthyl)aniline, le 2-(2-aminoéthoxy)éthanol, le 3-amino-1-propanol, le 5-amino-1-pentanol, la monoéthanolamine, la *N*-(2-aminoéthyl)éthanolamine, l'isopropanolamine ou le 2,2'-(phénylamino)diéthanol, la 1-(2-hydroxyéthyl)pipérazine ou la 4-(2-hydroxyéthyl)morpholine, leurs dérivés ou leurs mélanges, une solution aqueuse de formaldéhyde à 20 à 40 % en poids étant utilisée en tant qu'aldéhyde, l'alcool étant relié par une liaison covalente dans la résine et la condensation étant réalisée in situ.

2. Procédé selon la revendication 1, **caractérisé en ce que** le rapport molaire aldéhyde sur cétone se situe dans la plage allant de 1:1 à 3,5:1.

3. Procédé selon la revendication 2, **caractérisé en ce que** 0,1 à 10 moles d'alcool par mole de cétone sont utilisées.

4. Procédé selon la revendication 3, **caractérisé en ce que** la condensation est effectuée en présence de catalyseurs alcalins à des températures comprise entre 40 °C et 120 °C.

5. Procédé selon la revendication 4, **caractérisé en ce qu'**une solution aqueuse de formaldéhyde à 30 % en poids est utilisée en tant qu'aldéhyde et de la méthylisobutylcétone en tant que cétone.
